# FASCICULE DE BREVET EUROPEEN

(11) **EP 1 972 834 B1**
(45) Date de publication et mention de la délivrance du brevet: **19.05.2010**
(21) Numéro de dépôt: 08305056.7
(22) Date de dépôt: 14.03.2008
(51) Int. Cl.: F16H 61/26, F16H 63/34

(54) **Dispositif de réglage de la commande de vitesse d'un véhicule automobile et procédé associé**
Vorrichtung zur Regulierung der Schaltsteuerung eines Fahrzeugs und entsprechendes Verfahren
Device for adjusting the shift control of an automobile and corresponding method

(30) Priorité: 19.03.2007 FR 0753898
(43) Date de publication de la demande: 24.09.2008
(73) Titulaire: Peugeot Citroën Automobiles S.A., 78140 Vélizy Villacoublay (FR)
(72) Inventeur: Epeche, Lionel, 78800 Houilles (FR)

(56) Documents cités:
- WO-A-2005/007442
- FR-A- 2 775 748
- FR-A- 2 885 981
- FR-A- 2 902 171
- GB-A- 2 295 208

## Description

La présente invention concerne un dispositif de réglage de la commande de vitesse d'un véhicule automobile. Elle concerne également un procédé de réglage de la commande de vitesse d'un véhicule automobile, utilisant un tel dispositif.

Un bon réglage de commande de vitesse de véhicule automobile exige, au préalable, que l'on s'assure du bon positionnement au point mort du levier de vitesse et simultanément du bon positionnement au point mort du levier côté boîte de vitesses.

En ce qui concerne le levier de vitesse, un outil spécifique le.maintient, de façon connue en soi, au point mort pour effectuer le réglage. Par contre, en ce qui concerne le levier côté boîte de vitesses, il n'y a rien de comparable : il résulte de cela que de nombreux véhicules présentent une commande de vitesse mal réglée parce que le levier côté boîte de vitesses est mal positionné lors du réglage de ladite commande de vitesse.

Il y a donc nécessité de trouver un moyen de réglage précis du levier côté boîte de vitesses au cours de opérations de réglage de la commande de vitesse.

On connaît, par exemple, selon le document FR 2 775 226, un dispositif de réglage de la course de sélection d'un levier de vitesse de véhicule automobile entre le point mort et le couloir de vitesses 1-2. Dans ce dispositif, un élément du levier de vitesse coopère, en position angulaire correspondant au couloir 1-2, en appui contre une butée présentée par une partie du véhicule. Cet élément est déplaçable pour échapper à la butée, de façon à permettre un débattement angulaire plus important du levier correspondant à la sélection et au passage de la marche arrière. La butée, qui est un doigt monté coulissant dans un support, est montée avec capacité de déplacement en translation et de blocage en position par rapport à l'élément que présente le levier de vitesse.

La solution de réglage exposée dans ce document de l'art antérieur se rapporte à la course de sélection d'un levier de vitesses entre le point mort et la position d'une vitesse. Elle ne s'applique pas au réglage de la position au point mort du levier côté boîte de vitesses.

On connaît également du document FR 2 885 981, un dispositif de blocage provisoire d'un levier de sélection et de passage de vitesse, qui constitue l'état de la technique le plus proche des revendications indépendantes 1 et 7.

Ledit dispositif comporte une clé de blocage amovible logée dans deux évidements en regard l'un de l'autre et réalisés respectivement dans un bossage solidaire du carter d'embrayage fixé au carter de la boîte de vitesse, et dans une partie solidaire du levier de la boîte de vitesses, de manière à bloquer au moins en translation le levier de la boîte de vitesses relativement au carter d'embrayage.

Cependant, ce dispositif ne permet pas un réglage précis des positions de point mort en correspondance avec la position de point mort du levier de vitesses côté boîte et la position de point mort du levier côté conducteur.

Le but de la présente invention est de fournir un dispositif qui permette un réglage précis de la commande de vitesse de véhicule automobile, de façon à éviter les mises sur le marché de véhicules à commande de vitesse mal réglée, lesquels sont sources de pannes et, par conséquent, de surcoûts.

Un autre but de la présente invention est de fournir un tel dispositif de réglage, qui soit de fabrication simple, d'utilisation aisée, qui soit robuste, fiable et économique.

Un autre but de la présente invention est de fournir un procédé de réglage précis de la commande de vitesse d'un véhicule automobile, utilisant le dispositif de la présente invention.

Pour parvenir à ces buts, la présente invention propose un dispositif de réglage de la commande de vitesse d'un véhicule automobile, conforme à l'objet de la revendication 1.

Selon un mode préféré de réalisation de l'invention, l'outil de centrage comporte une fente destinée à bloquer en position au point mort l'axe du levier côté boîte de vitesses pendant toute l'opération de réglage de la commande de vitesse.

Selon le mode de réalisation préféré également, l'outil de centrage comporte un moyen de positionnement qui lui assure, lorsqu'il est mis en place sur la boîte de vitesses, la position dans laquelle il peut immobiliser au point mort l'axe du levier côté boîte vitesses pendant toute l'opération de réglage de la commande de vitesse.

De préférence, le moyen de positionnement est constitué par un orifice de centrage, pratiqué dans l'outil de centrage et destiné à coopérer avec un axe solidaire du carter de la boîte de vitesses, afin d'obtenir le positionnement précis de l'outil de centrage sur la boîte de vitesses.

De préférence également, l'outil de centrage comporte au moins une face en appui sur le carter de la boîte de vitesses, afin de rester en place pendant toute l'opération de réglage de la commande de vitesse.

Selon une caractéristique avantageuse, l'outil de centrage comporte un aimant disposé à l'intérieur de la fente.

La présente invention concerne également un procédé de réglage de la commande de vitesse d'un véhicule automobile, qui comporte les étapes suivantes :
- avant accostage de la boîte de vitesses sur la caisse du véhicule, mise en place sur la boîte de vitesses d'un outil de centrage pour l'immobilisation au point mort de l'axe du levier côté boîte de vitesses, ledit outil de centrage étant conforme à l'une quelconque des revendications 1 à 6,
- fixation de la commande de vitesse sur la console centrale du véhicule,
- après accostage du moteur et de la boîte de vitesses sur la caisse du véhicule, fixation de la commande de vitesse sur la boîte de vitesses,
- réglage du jeu de la commande de vitesse,
- retrait dudit outil de centrage de l'axe du levier côté boîte de vitesses.

De plus, selon un mode de réalisation préféré du procédé, on met préalablement en place un outil de centrage du levier de vitesses pour immobiliser ce dernier au point mort pendant le réglage de la commande de vitesse, ledit outil de centrage du levier de vitesses étant ensuite retiré lorsque ledit réglage est terminé.

D'autres buts, avantages et caractéristiques de l'invention apparaîtront dans la description qui suit d'un mode de réalisation préféré, non limitatif de l'objet et de la portée de la présente demande de brevet, accompagnée de dessins dans lesquels :
- la figure 1 représente, de manière schématique, le principe du réglage de la commande de vitesse d'un véhicule, selon l'art antérieur,
- la figure 2 représente, de manière schématique, le principe du réglage de la commande de vitesse d'un véhicule, selon la présente invention,
- la figure 3 est une vue frontale, en perspective, schématique, de l'outil de centrage de l'axe du levier côté boîte de vitesses, selon la présente invention,
- la figure 4 est une vue latérale, en perspective, schématique, de l'outil de centrage de la figure 3,
- la figure 5 est une vue en perspective d'une partie de boîte de vitesses montrant le levier côté boîte de vitesses en mauvaise position par rapport à celle associée à sa position au point mort,
- la figure 6 est une vue en perspective d'une partie de boîte de vitesses montrant l'axe du levier côté boîte de vitesses au cours de son insertion dans un outil de centrage selon la présente invention, dans le but d'être immobilisé dans une position au point mort,
- la figure 7 est une vue en perspective d'une partie de boîte de vitesses montrant l'axe du levier côté boîte de vitesses placé dans l'outil de centrage selon la présente invention, et en conséquence immobilisé dans une position au point mort, et
- la figure 8 est une vue en perspective d'une partie de boîte de vitesses montrant l'outil de centrage des figures 6 et 7 en appui contre le carter de la boîte de vitesses.

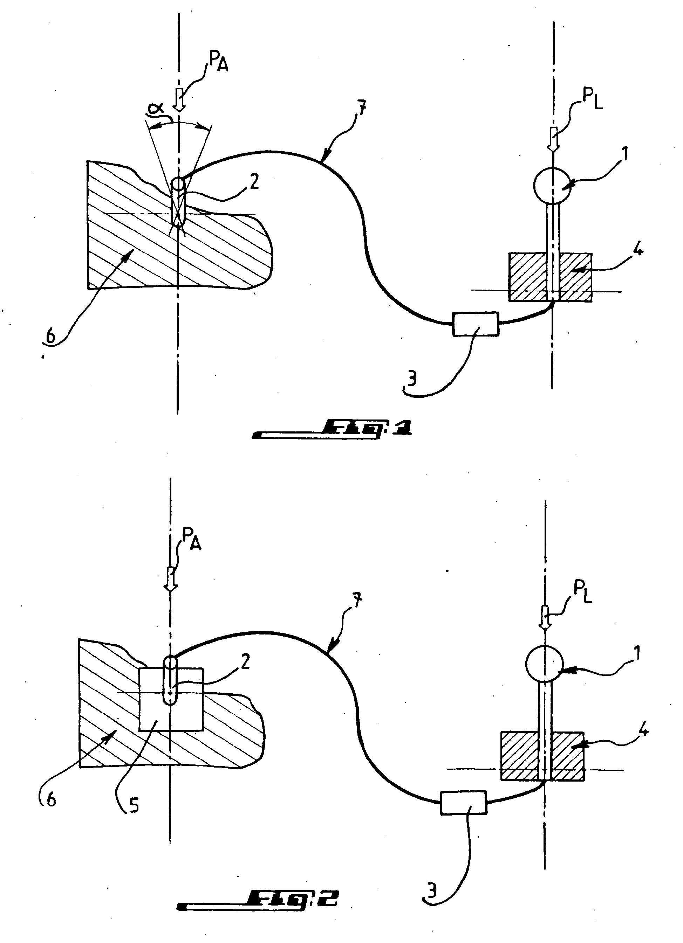

En référence au dessin de la figure 1, on a représenté, de manière schématique, le principe du réglage d'une commande de vitesse de véhicule automobile, selon l'art antérieur. La commande de vitesse comprend notamment le levier de vitesses 1 situé près du conducteur, l'axe du levier côté boîte de vitesses 2 relié au levier de vitesses 1 par un câble de sélection de la commande de vitesses 7. La position précise du levier de vitesses 1 au point mort P_{L} est assurée par son insertion dans un outil de centrage, de type connu en soi, référencé 4, configuré et positionné pour immobiliser le levier 1 dans la position précise correspondant au point mort P_{L}.

La référence 3 illustre, de façon très schématique, le système de réglage proprement dit de la commande de vitesse, ou système de réglage du jeu de la commande, ou système de verrou. Pendant le réglage de ce système 3, la position au point mort de l'axe du levier côté boîte de vitesses 2 n'est pas garantie et peut s'écarter de la position précise de point mort P_{A} d'un écart angulaire compris dans un angle α (figure 1). L'existence de cet écart angulaire α est le résultat d'un mauvais réglage de la commande de vitesse.

Le principe de la présente invention est décrit ci-dessous en référence au schéma de la figure 2. Il se distingue du principe connu de la figure 1 par la création d'un outil supplémentaire - appelé outil de centrage 5 - qui a pour fonction de garantir l'immobilisation en position précise au point mort P_{A} de l'axe du levier côté boîte de vitesses 2.

Ainsi, pendant les phases de réglage de la commande de vitesse au moyen du système de réglage 3, la position au point mort P_{L} du levier de vitesses 1 et la position au point mort P_{A} de l'axe du levier 2 côté boîte de vitesses sont garanties simultanément. De cette façon, le bon réglage de la commande de vitesse en usine terminale est parfaitement assuré.

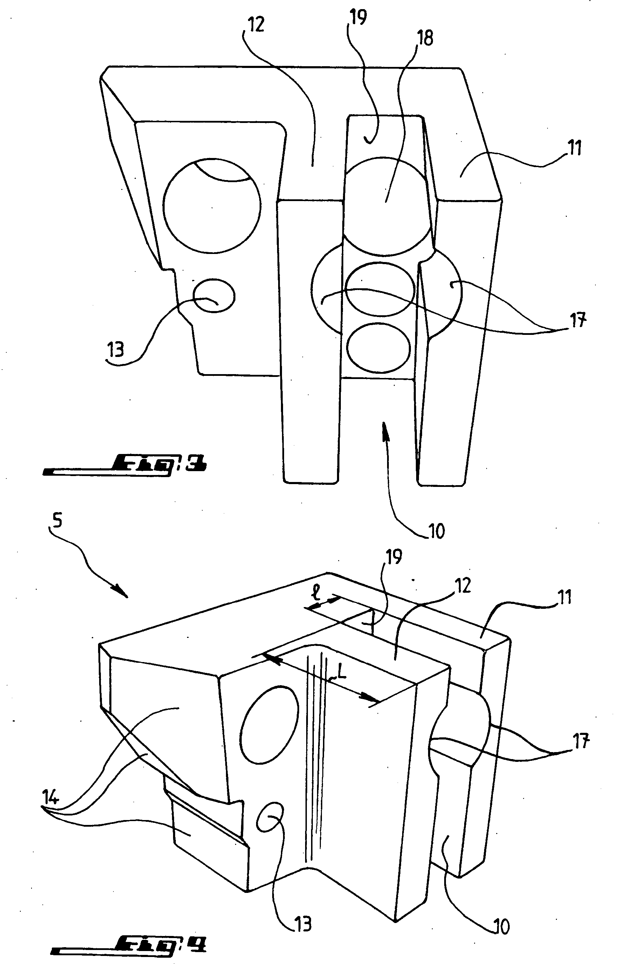

Un exemple de réalisation de l'outil de centrage 5 est représenté sur les figures 3 et 4. Il comprend deux flasques 11 et 12, parallèles, définissant une fente 10 destinée, comme il sera exposé plus loin en détail, au positionnement et à l'immobilisation de l'axe du levier côté boîte de vitesses 2 en position au point mort P_{A}. La fente 10, de largeur « 1 » et de profondeur « L », est dimensionnée pour recevoir et immobiliser le levier 2. Par conséquent, la largeur « 1 » est sensiblement de même valeur que le diamètre de l'axe du levier 2 et la profondeur « L » correspond sensiblement à la longueur d'axe 2 en saillie de sa sortie de la boîte de vitesses 6.

Il peut être prévu de disposer un aimant 18 à l'intérieur de la fente 10 destiné à coopérer avec l'axe du levier 2 afin de garantir la bonne tenue de l'outil de centrage 5 sur l'axe de levier 2 ainsi que son bon positionnement autour du dit axe de levier 2. Pour faciliter la mise en place dudit aimant 18 à l'intérieur de la fente 10, il peut être prévu de ménager des gorges 17 dans au moins l'un des flasques 11 et 12. L'aimant 18 est ainsi inséré dans la fente 10 via un chemin délimité par les gorges 17, et ensuite fixé dans le fond 19 de la fente 10. Avantageusement, deux gorges 17 en arc de cercle sont symétriquement formées en vis-à-vis dans les deux flasques 11 et 12 ; lesdites gorges 17 étant inscrites dans un cercle de diamètre légèrement supérieur au diamètre de l'aimant 18 de forme cylindrique.

L'outil de centrage 5 comporte également des faces d'appui 14 destinées à coopérer par concordance des formes avec des surfaces extérieures du carter de la boîte de vitesses 6, afin d'immobiliser l'outil de centrage 5 dans la position souhaitée pendant toute la durée des phases de l'opération de réglage.

D'autres caractéristiques de l'outil de centrage 5 apparaîtront dans la description qui suit de son mode d'utilisation.

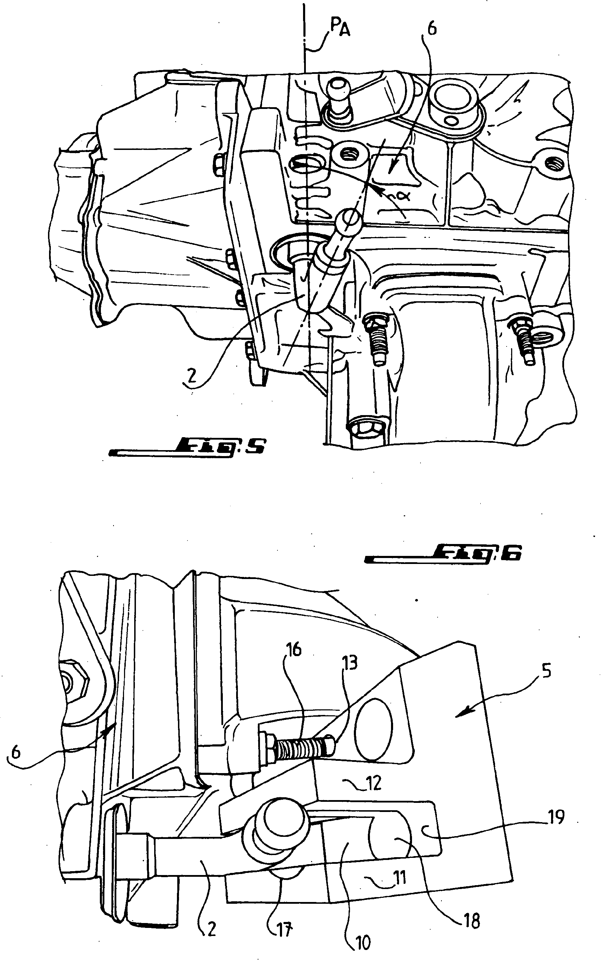

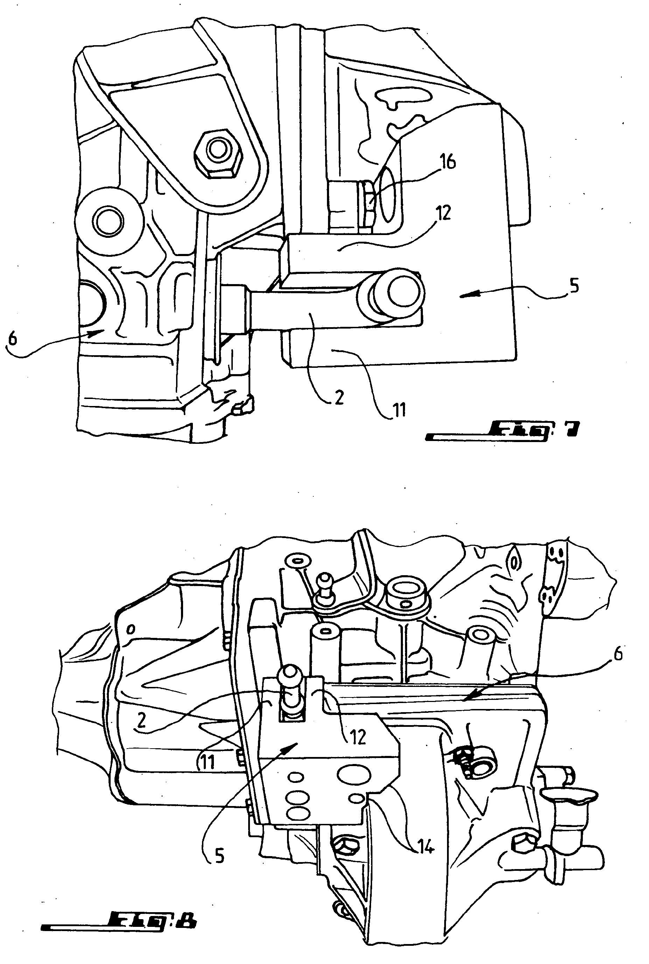

Pour permettre un bon réglage de la commande de vitesse, l'opérateur place l'outil de centrage 5 sur le carter de la boîte de vitesses 6, comme représenté sur le dessin de la figure 6. Le positionnement précis de l'outil de centrage 5 sur le carter de la boîte de vitesses 6 est réalisé par un axe 16 en saillie du carter qui coopère avec un orifice 13 de l'outil de centrage 5. L'axe 16 peut être, par exemple, une vis saillante. L'opérateur introduit la vis 16 dans l'orifice 13 de l'outil de centrage 5, et simultanément l'axe du levier 2 dans la fente 10 de l'outil de centrage 5. Le levier côté boîte de vitesses 2 est alors bloqué en position angulaire par la fente 10, et cette position d'immobilisation correspond à la bonne position associée au point mort P_{A}, comme représenté sur le dessin de la figure 7.

L'outil de centrage 5 comporte au moins une face 14 en appui sur le carter de la boîte de vitesses 6, afin de rester en place pendant l'opération de réglage de la commande de vitesse, comme représenté sur le dessin de la figure 8. En outre, l'axe de levier 2 peut être en contact magnétique avec l'aimant 18 placé à l'intérieur de la fente 10, afin également que l'outil de centrage 5 reste en place pendant l'opération.

L'outil de centrage 5 décrit ci-dessus permet de garantir le bon réglage de la commande de vitesse sur la chaîne de montage en usine terminale. Son mode d'utilisation est le suivant :
- l'outil de centrage 5 est mis en place sur la boîte de vitesses 6 avant l'accostage de la boîte de vitesses 6 dans la caisse du véhicule,
- la commande de vitesse est fixée sur la console centrale du véhicule,
- après l'accostage du moteur et de la boîte de vitesses 6, la commande de vitesse est fixée sur la boîte de vitesses 6,
- le réglage du jeu de la commande de vitesse est effectué au moyen du système de réglage 3, l'axe du levier côté boîte de vitesses 2 étant pendant toute la durée du réglage en position précise au point mort P_{A} grâce à l'outil de centrage 5,
- l'opération de réglage étant terminée, l'outil de centrage 5 du levier côté boîte de vitesses 2 est ensuite retiré.

Selon le mode préféré de mise en oeuvre du procédé de l'invention, un autre outil de centrage 4, de type connu en soi, est mis en place sur le levier de vitesses 1 pour l'immobiliser en position au point mort P_{L} pendant toute la durée du réglage de la commande de vitesse, et cet outil de centrage 4 du levier de vitesses 1 est ensuite retiré lorsque le réglage est terminé.

La présente invention présente de nombreux avantages, parmi lesquels les avantages suivantes :
- elle permet de garantir le bon réglage de la commande de vitesse, et par conséquent, elle permet d'éviter de vendre des véhicules avec des commandes de vitesse mal réglées qui sont la source de pannes, et donc de surcoûts,
- elle permet une diminution sensible du nombre de casses de boîtes de vitesses ayant pour cause de mauvais réglages de la commande de vitesse.

Bien entendu, la présente invention n'est pas limitée au mode de réalisation décrit et représenté ci-dessus à titre d'exemple ; d'autres modes de réalisation peuvent être conçus par l'homme de métier sans sortir du cadre et de la portée de la présente invention.

## Revendications

1. Dispositif de réglage de la commande de vitesse d'un véhicule automobile, ladite commande de vitesse comprenant notamment le levier de vitesses (1), un moyen de réglage du jeu de la commande (3) et le levier côté boîte de vitesses (2), **caractérisé en ce que** ledit dispositif est un outil de centrage (5) dudit levier côté boîte de vitesses (2), qui est mis en place sur la boîte de vitesses (6) avant l'opération de réglage de la commande de vitesse et qui est configuré pour immobiliser en position de point mort (P_{A}) l'axe du levier côté boîte de vitesses (2) pendant la durée de l'opération de réglage de la commande de vitesse ; la position de point mort (PA), côté boîte de vitesses, correspondant à la position du levier de vitesse (1), situé près du conducteur, au point mort (PL).

2. Dispositif selon la revendication 1, **caractérisé en ce que** l'outil de centrage (5) comporte une fente (10) destinée à bloquer en position de point mort (P_{A}) l'axe du levier côté boîte de vitesses (2) pendant l'opération de réglage de la commande de vitesse.

3. Dispositif selon l'une quelconque des revendications 1 et 2, **caractérisé en ce que** l'outil de centrage (5) comporte un moyen de positionnement (13, 16) qui lui assure, lorsqu'il est mis en place sur la boîte de vitesses (6), une position dans laquelle il immobilise au point mort (P_{A}) l'axe du levier côté boîte de vitesses (2) pendant l'opération de réglage de la commande de vitesses.

4. Dispositif selon la revendication 3, **caractérisé en ce que** ledit moyen de positionnement est constitué par un orifice de centrage (13) destiné à coopérer avec un axe (16) solidaire du carter de la boîte de vitesses (6) afin de positionner l'outil de centrage (5) sur la boîte de vitesses (6).

5. Dispositif selon l'une quelconque des revendications 1 à 4, **caractérisé en ce que** l'outil de centrage (5) comporte au moins une face (14) en appui sur le carter de la boîte de vitesses (6), afin de rester en place pendant l'opération de réglage de la commande de vitesse.

6. Dispositif selon l'une quelconque des revendications 2 ou 3 à 5, lorsque prises dépendantes de la revendication 2, **caractérisé en ce que** l'outil de centrage (5) comporte un aimant (18) disposé à l'intérieur de la fente (10).

7. Procédé de réglage de la commande de vitesse d'un véhicule automobile, ladite commande de vitesse comprenant notamment le levier de vitesses (1), un moyen de réglage du jeu de la commande (3) et le levier côté boîte de vitesses (2), **caractérisé par** les étapes suivantes :
- avant accostage de la boîte de vitesses (6) sur la caisse du véhicule, mise en place sur la boîte de vitesses (6) d'un outil de centrage (5) pour l'immobilisation au point mort (P_{A}) de l'axe du levier côté boîte de vitesses (2), ledit outil de centrage (5) étant conforme à l'une quelconque des revendications 1 à 6,
- fixation de la commande de vitesse sur la console centrale du véhicule,
- après accostage du moteur et de la boîte de vitesses (6), fixation de la commande de vitesse sur la boîte de vitesses (6),
- réglage du jeu de la commande de vitesse,
- le réglage étant terminé, retrait dudit outil de centrage (5) du levier côté boîte de vitesses (2).

8. Procédé selon la revendication 7, **caractérisé en ce qu'**au préalable un outil de centrage (4) est mis en place sur le levier de vitesses (1) pour l'immobilisation au point mort (P_{L}) du levier de vitesses (1) pendant le réglage de la commande de vitesse, ledit outil de centrage (4) étant ensuite retiré lorsque le réglage est terminé.

## Claims

1. Device for adjusting the gearshift control of a motor vehicle, the said gearshift control comprising in particular the gear lever (1), a means (3) of adjusting the play in the control and the lever (2) at the gearbox end, **characterized in that** the said device is a tool (5) for centring the said lever (2) at the gearbox end, which tool is placed on the gearbox (6) prior to the operation of adjusting the gearshift control and which is configured to immobilize the axis of the lever (2) at the gearbox end in the neutral position (Pₐ) throughout the operation of adjusting the gearshift control; the position of the neutral position(Pₐ) at the gearbox end corresponding to the position of the gear lever (1), situated near the driver, at the neutral position (PL).

2. Device according to Claim 1, **characterized in that** the centring tool (5) comprises a slot (10) intended to block the axis of the lever (2) at the gearbox end in the neutral position (Pₐ) during the operation of adjusting the gearshift control.

3. Device according to either one of Claims 1 and 2, **characterized in that** the centring tool (5) comprises a position means (13, 16) which for its part, when in place on the gearbox (6) provides a position in which it immobilizes in the axis of the lever (2) at the gearbox end in the neutral position (Pₐ) during the operation of adjusting the gearshift control.

4. Device according to Claim 3, **characterized in that** the said positioning means consists of a centring orifice (13) intended to collaborate with an axis (16) secured casing of the gearbox (6) so as to position the centring tool (5) on the gearbox (6).

5. Device according to any one of Claims 1 to 4, **characterized in that** the centring tool (5) comprises at least one face (14) resting against the casing of the gearbox (6) so as to remain in position during the operation of adjusting the gearshift control.

6. Device according to any one of Claims 2 or 3 to 5 when taken as being dependent on Claim 2, **characterized in that** the centring tool (5) comprises a magnet (18) positioned inside the slot (10).

7. Method of adjusting the gearshift control of a motor vehicle, the said gearshift control comprising in particular the gear lever (1), a means (3) of adjusting the play in the control and the lever (2) at the gearbox end, **characterized by** the following steps:
- before the gearbox (6) is offered up to the body shell of the vehicle, fitting on the gearbox (6) a centring tool (5) for immobilizing the axis of the lever (2) at the gearbox end in the neutral position (Pₐ), the said centring tool (5) being a tool according to any one of Claims 1 to 6,
- fixing the gearshift control to the central console of the vehicle,
- once the engine and gearbox (6) have been offered up, fixing the gearshift control to the gearbox (6),
- adjusting the play in the gearshift control,
- once the adjustment has been completed, removing the said centring tool (5) from the lever (2) at the gearbox end.

8. Method according to Claim 7, **characterized in that** prior to this a centring tool (4) is fitted onto the gear lever (1) to immobilize the gear lever (1) in the neutral position (P_{L}) during adjustment of the gearshift control, the centring tool (4) then being removed when adjustment has been completed.

## Patentansprüche

1. Vorrichtung zur Einstellung der Schaltsteuerung eines Kraftfahrzeugs, wobei die Schaltsteuerung insbesondere den Schalthebel (1), eine Einrichtung zur Einstellung des Spiels der Schaltsteuerung (3) und den getriebeseitigen Hebel (2) enthält, **dadurch gekennzeichnet, dass** die Vorrichtung ein Zentrierwerkzeug (5) des getriebeseitigen Hebels (2) ist, das vor dem Vorgang der Einstellung der Schaltsteuerung auf dem Getriebe (6) angeordnet wird und konfiguriert ist, um die Achse des getriebeseitigen Hebels (2) während der Dauer des Einstellvorgangs der Schaltsteuerung in Leerlaufstellung (P_{A}) zu immobilisieren; wobei die getriebeseitige Leerlaufstellung (P_{A}) der Leerlaufstellung (P_{L}) des nahe dem Fahrer befindlichen Schalthebels (1) entspricht.

2. Vorrichtung nach Anspruch 1, **dadurch gekennzeichnet, dass** das Zentrierwerkzeug (5) einen Schlitz (10) aufweist, der dazu bestimmt ist, die Achse des getriebeseitigen Hebels (2) während des Einstellvorgangs der Schaltsteuerung in der Leerlaufstellung (P_{A}) zu blockieren.

3. Vorrichtung nach einem der Ansprüche 1 und 2, **dadurch gekennzeichnet, dass** das Zentrierwerkzeug (5) eine Positioniereinrichtung (13, 16) aufweist, die ihm, wenn es auf dem Getriebe (6) angeordnet ist, eine Stellung sichert, in der es die Achse des getriebeseitigen Hebels (2) während des Einstellvorgangs der Schaltsteuerung im Leerlauf (P_{A}) immobilisiert.

4. Vorrichtung nach Anspruch 3, **dadurch gekennzeichnet, dass** die Positioniereinrichtung aus einer Zentrieröffnung (13) besteht, die dazu bestimmt ist, mit einer fest mit dem Gehäuse des Getriebes (6) verbundenen Achse (16) zusammenzuwirken, um das Zentrierwerkzeug (5) auf dem Getriebe (6) zu positionieren.

5. Vorrichtung nach einem der Ansprüche 1 bis 4, **dadurch gekennzeichnet, dass** das Zentrierwerkzeug (5) mindestens eine Seite (14) in Auflage auf dem Gehäuse des Getriebes (6) aufweist, um während des Einstellvorgangs der Schaltsteuerung an Ort und Stelle zu bleiben.

6. Vorrichtung nach einem der Ansprüche 2 oder 3 bis 5, wenn sie von Anspruch 2 abhängen, **dadurch gekennzeichnet, dass** das Zentrierwerkzeug (5) einen Magnet (18) aufweist, der innerhalb des Schlitzes (10) angeordnet ist.

7. Verfahren zur Einstellung der Schaltsteuerung eines Kraftfahrzeugs, wobei die Schaltsteuerung insbesondere den Schalthebel (1), eine Einrichtung zur Einstellung des Spiels der Schaltsteuerung (3) und den getriebeseitigen Hebel (2) aufweist, **gekennzeichnet durch** die folgenden Schritte
- vor dem Ankoppeln des Getriebes (6) auf dem Aufbau des Fahrzeugs, Anordnen auf dem Getriebe (6) eines Zentrierwerkzeugs (5) zum Immobilisieren der Achse des getriebeseitigen Hebels (2) im Leerlauf (P_{A}), wobei das Zentrierwerkzeug (5) einem der Ansprüche 1 bis 6 entspricht,
- Befestigung der Schaltsteuerung an der Mittelkonsole des Fahrzeugs,
- nach dem Ankoppeln des Motors und des Getriebes (6), Befestigung der Schaltsteuerung am Getriebe (6),
- Einstellung des Spiels der Schaltsteuerung,
- nach Beendigung der Einstellung, Entfernen des Zentrierwerkzeugs (5) vom getriebeseitigen Hebel (2).

8. Verfahren nach Anspruch 7, **dadurch gekennzeichnet, dass** vorab ein Zentrierwerkzeug (4) auf dem Schalthebel (1) angeordnet wird, um den Schalthebel (1) während der Einstellung der Schaltsteuerung im Leerlauf (P_{L}) zu immobilisieren, wobei das Zentrierwerkzeug (4) anschließend entfernt wird, wenn die Einstellung beendet ist.
